(19) Europäisches Patentamt
European Patent Office
Office européen des brevets

(11) **EP 1 627 479 B1**

(12) **FASCICULE DE BREVET EUROPEEN**

(45) Date de publication et mention
de la délivrance du brevet:
**06.07.2016 Bulletin 2016/27**

(21) Numéro de dépôt: **04767174.8**

(22) Date de dépôt: **25.05.2004**

(51) Int Cl.:
***H04H 20/46*** *(2008.01)*    ***H04L 27/26*** *(2006.01)*

(86) Numéro de dépôt international:
**PCT/FR2004/001296**

(87) Numéro de publication internationale:
**WO 2004/107603 (09.12.2004 Gazette 2004/50)**

(54) **PROCÉDÉ ET ÉMETTEUR DE RADIODIFFUSION SIMULTANÉE METTANT EN OEUVRE UN PRÉ-FILTRAGE DU SIGNAL NUMÉRIQUE MULTIPORTEUSE**

SIMULCAST-RUNKFUNKVERFAHREN UND EMPFÄNGER MIT VORFILTERUNG DES DIGITALEN MERHTRÄGERSIGNALS

METHOD AND SIMULTANEOUS RADIO BROADCAST TRANSMITTER USING A PRE-FILTERING OF THE MULTI-CARRIER DIGITAL SIGNAL

(84) Etats contractants désignés:
**DE FR**
Etats d'extension désignés:
**HR**

(30) Priorité: **27.05.2003  FR 0306448**

(43) Date de publication de la demande:
**22.02.2006  Bulletin 2006/08**

(73) Titulaire: **TDF**
**75732 Paris Cedex 15 (FR)**

(72) Inventeurs:
• **LANOISELEE, Marc**
**F-35200 Rennes (FR)**
• **LOUIN, Pierrick**
**F-35700 Rennes (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**EP-A- 0 952 696       EP-A- 1 276 257**
**DE-A- 10 123 150      US-A- 6 144 705**
**US-A1- 2002 080 887   US-B1- 6 452 977**

EP 1 627 479 B1

**EP 1 627 479 B1**

**Description**

Le domaine de l'invention est celui de la radiodiffusion numérique. Plus précisément, l'invention concerne la diffusion de signaux numériques multiporteuse susceptibles de perturber des signaux transmis dans des bandes de fréquence adjacentes.

Ainsi, un domaine d'application particulier de l'invention est celui du partage des ressources, dans les bandes de fréquence actuellement dévolues aux émissions en AM (Modulation d'Amplitude), c'est-à-dire en ondes longues de 153 à 279 kHz, en ondes moyennes dé 520 à 2500 kHz et en ondes courtes de 3,1 à 26,1 MHz. On prévoit en effet de remplacer progressivement les services analogiques, qui sont en perte de vitesse, par des services numériques de bien meilleure qualité, afin de re-dynamiser l'écoute de la radio dans ces bandes de fréquence.

Ainsi, dans le cadre du projet DRM (Digital Radio Mondiale), auquel les titulaires de la présente demande de brevet prennent part, a été définie une norme de radiodiffusion numérique validée à l'ETSI en septembre 2001. Dans ce système, on prévoit de transmettre un service de radiophonie utilisant des techniques de compression, de codage et de modulation numérique qui permettent d'adapter au mieux les caractéristiques du signal aux contraintes du canal dans ces bandes de fréquence.

La technique de transmission employée est le COFDM déjà mis en oeuvre dans les standards DAB (« Digital Audio Broadcasting » ou « Diffusion audionumérique ») et DVB-T (« Digital Video Broadcasting - Terrestrial» ou « Diffusion vidéo numérique - terrestre»).

Dans une phase transitoire d'introduction du système DRM, les partenaires du consortium, et les radiodiffuseurs notamment, souhaitent assurer la continuité du service AM actuel et mettre en oeuvre des émissions simultanées qui associent un signal numérique et un signal AM analogique classique qui diffusent des programmes identiques (technique appelée « simulcast »).

Pour associer ces deux émissions, il est notamment envisagé de les placer dans des canaux distincts à des fréquences adjacentes dans le spectre radiofréquence.

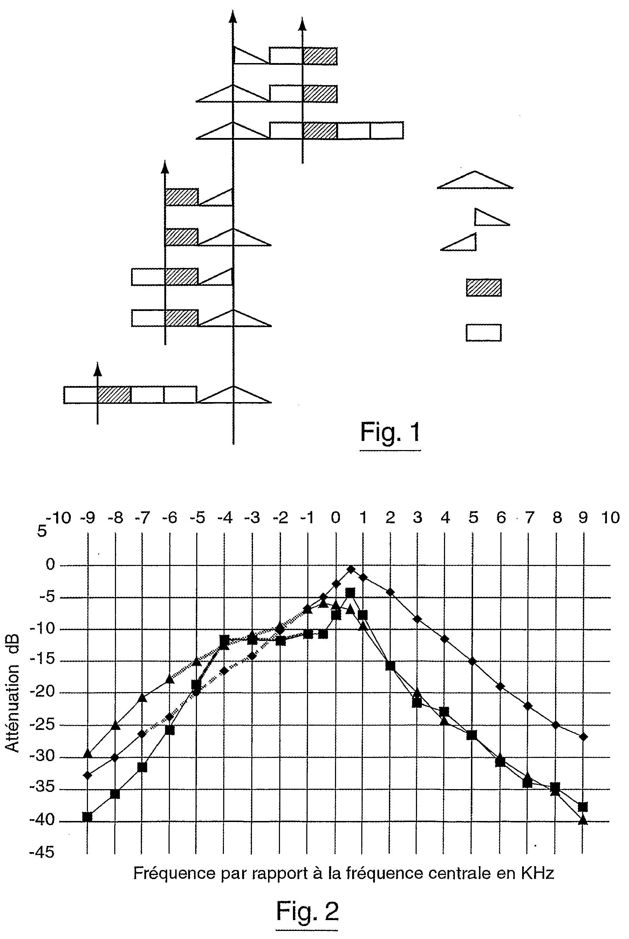

Tel que prévu par le consortium de normalisation DRM, le principe de mode « simulcast » associe une émission analogique AM et une émission numérique DRM placées dans des canaux contigus du spectre de fréquence suivant différentes configurations possibles, ainsi que représenté à la figure 1.

Sur cette figure, le signal AM est représenté par un triangle, et le signal DRM par un rectangle. Les canaux numériques et analogiques peuvent occuper une bande passante variable par multiple de 4,5 kHz en ondes moyennes, et 5 kHz en ondes courtes. Dans tous les cas, ils sont adjacents.

Cette approche est bien adaptée pour le signal numérique, dont la réception peut être assurée de façon efficace. Elle pose en revanche des problèmes dans les récepteurs AM classiques, et en particulier dans les récepteurs AM grand public bas de gamme qui représentent une grande proportion du parc des récepteurs.

En effet, ceux-ci présentent généralement de mauvaises performances en sélectivité et en réponse amplitude-fréquence.

Comme on peut le noter sur la figure 2, qui représente les groupes de sélectivité de trois différents récepteurs AM en ondes moyennes (OM), avec un espacement entre canaux au bas de 9 kHz. On peut constater que ces réponses ne sont pas linéaires et outrepassent largement les limites du canal AM, qui est de +/- 4,5 kHz par rapport à la fréquence centrale Fc du canal en ondes moyennes.

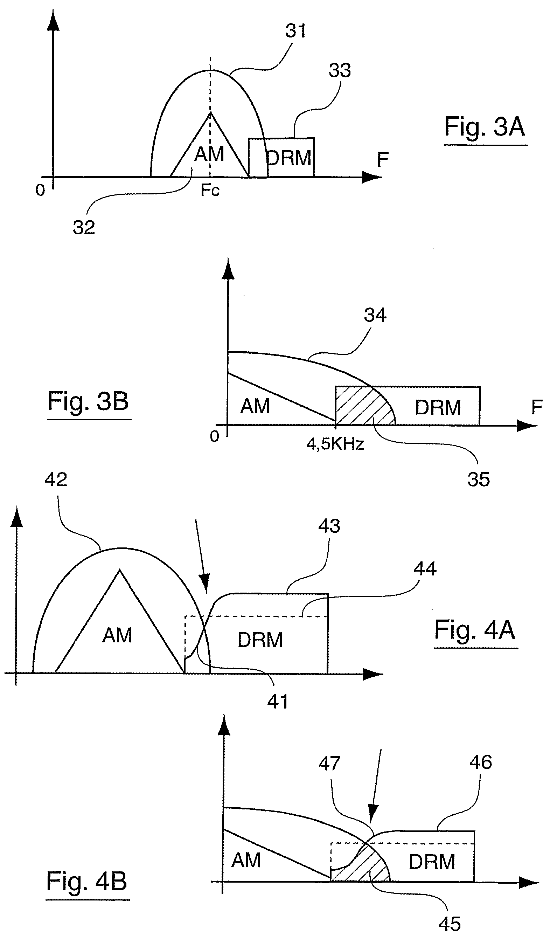

Comme cela apparaît sur les figures 3a et 3b, cette bande passante 31, trop large en radiofréquence, englobe non seulement le signal AM 32, mais également une portion plus ou moins importante du canal numérique adjacent 33.

Comme illustré en figure 3b, le signal audio démodulé 34 contient une portion 35 du signal numérique, dans les fréquences au-delà de 4,5 kHz. Or, on sait que ces fréquences sont celles ou l'oreille est très sensible. On constate ainsi, à l'écoute, un brouillage du signal audio.

Ce résultat va complètement à l'encontre de l'objectif fixé par l'approche « simulcast », qui est de conserver la possibilité, pour les détenteurs d'un récepteur AM classique, de recevoir des émissions. Si celles-ci sont brouillées, les auditeurs ne les écouteront bien sûr plus.

On peut bien sûr envisager d'atténuer le brouillage, en réduisant le niveau de puissance du signal numérique par rapport à celui du signal analogique AM. Cependant, dans ce cas, la réduction du niveau du signal numérique se traduit par une perte importante sur la zone de couverture du service numérique.

Des mesures de rapport de protection ont en effet montré qu'un recul du signal numérique par rapport au signal analogique d'au moins 16 dBc est nécessaire pour garantir un niveau de brouillage relativement acceptable, avec une bonne proportion des récepteurs AM peu performants. Mais, même dans ce cas, il subsiste des situations dans lesquelles la réception AM reste très perturbée.

D'autres approches pour transmettre simultanément le signal numérique et le signal analogique peuvent être envisagées. Cependant, dans tous les cas, le signal numérique viendra perturber le signal analogique, le brouillant dans les récepteurs AM peu performants.

Le document EP0952696 propose une technique permettant de réduire l'influence de signaux modulés numériquement d'un canal sur les signaux modulés numériquement d'un canal adjacent, dans un schéma de type IBOC-AM (In-band on channel AM).

L'invention a notamment pour objectif de pallier ces inconvénients de l'art antérieur.

Plus précisément, un objectif de l'invention est de fournir une technique, permettant de transmettre un signal numérique multiporteuse, de façon adjacente à au moins un autre signal, notamment dans les bandes de fréquence allant de quelques centaines de kHz à quelques dizaines de mHz sans altérer de façon trop importante les signaux adjacents.

Ainsi, un objectif de l'invention est de permettre la transmission simultanée (« simulcast ») d'un signal numérique et d'un signal analogique AM correspondant, de façon que la plupart des récepteurs AM, et notamment les récepteurs bas de gamme peu sélectifs, puissent continuer à recevoir les signaux AM (comme si aucun signal numérique était émis).

En d'autres termes, l'invention a pour objectif d'assurer une continuité de services, pour les récepteurs existants, tout en permettant le développement des récepteurs numériques, dans des bandes de fréquence adjacentes.

Encore un autre objectif de l'invention est de fournir une telle technique, qui ne nécessite pas de réduire la puissance d'émission du signal numérique, et donc sa portée géographique. En d'autres termes, l'invention a pour objectif de permettre une technique ne privilégiant pas les récepteurs AM anciens au détriment des récepteurs numériques nouveaux.

Encore un autre objectif de l'invention est de fournir une telle technique, ne nécessitant aucune adaptation dans les récepteurs, qu'il s'agisse de récepteurs analogiques ou des récepteurs numériques.

L'invention a également pour objectif de fournir une telle technique, qui puisse s'adapter aux conditions particulières d'un émetteur, et à l'évolution dans le temps des parcs de récepteurs.

Ces objectifs ainsi que d'autres, qui apparaîtront plus clairement par la suite, sont atteints à l'aide d'un procédé de radiodiffusion d'un premier signal numérique multiporteuse occupant une première bande de fréquence adjacente à au moins une seconde bande de fréquence affectée chacune à un second signal. Selon l'invention, on applique audit premier signal un pré-filtrage, avant son émission, de façon à atténuer la puissance dudit premier signal dans au moins une première portion de ladite première bande de fréquence, voisine de la ou desdites secondes bandes de fréquence.

Ainsi, le second signal (ou les seconds signaux) n'est pas fortement perturbé par le signal numérique, même si le filtre radiofréquence qu'il utilise est peu sélectif, comme c'est le cas par exemple dans de nombreux récepteurs AM actuels. La structure du signal multiporteuse et son codage permettent de pallier (au moins en grande partie) cette atténuation partielle du signal.

En outre, ledit pré-filtrage augmente avantageusement la puissance dudit premier signal dans une seconde portion de ladite première bande de fréquence, éloignée de la ou desdites secondes bandes de fréquence.

L'augmentation de la qualité de réception du second signal ne se fait donc pas au détriment du premier signal. Il n'est pas nécessaire de réduire la puissance affectée à ce dernier, et donc sa portée géographique.

Au contraire, on augmente la puissance de la portion qui n'est pas susceptible de perturber le signal adjacent, ce qui permet une bonne réception de celle-ci (et donc, du fait des techniques de décodage, de pallier la faiblesse de la portion atténuée) et de conserver, voire augmenter, la portée géographique du premier signal.

Selon un mode de réalisation avantageux de l'invention, ledit ou au moins un desdits seconds signaux est un signal de radiodiffusion analogique. Il peut notamment s'agir d'un signal modulé en amplitude.

De façon avantageuse, ledit premier signal et ledit ou un desdits seconds signaux portent au moins en partie un même signal source. En d'autres termes, l'invention s'applique notamment à la technique dite « simulcast ».

Préférentiellement, ledit pré-filtrage conserve sensiblement la puissance du signal. Celle-ci peut également être augmentée.

Selon une caractéristique avantageuse de l'invention, ledit pré-filtrage est programmable.

Dans ce cas, la programmation dudit pré-filtrage peut notamment porter sur au moins un des éléments suivants :

- fréquence de coupure de filtrage ;
- puissance affectée à chaque portion de la première bande de fréquence ;
- forme du gabarit de filtrage ;

pente du filtre dans la ou les zones d'atténuation (« roll-off »).

Cette programmation dudit pré-filtrage tient compte préférentiellement d'au moins une des informations suivantes :

- bande de fréquence ;
- caractéristiques du ou des signaux adjacents ;
- caractéristiques particulières d'un émetteur ;
- caractéristiques particulières du canal de transmission ;
- évolution dans le temps des parcs de récepteurs.

**EP 1 627 479 B1**

De façon avantageuse, le gabarit dudit pré-filtrage présente des transitions progressives.

Selon un premier mode de réalisation avantageux de l'invention, ledit pré-filtrage est une pondération appliquée sélectivement sur chacune des fréquences porteuses dudit signal multiporteuse, avant l'application d'une transformation mathématique.

Dans ce cas, ladite pondération peut avantageusement tenir compte de coefficients de pondération stockés dans une table d'allocation.

Selon un second mode de réalisation avantageux de l'invention, ledit pré-filtrage est appliqué sur les composantes temporelles I et Q dudit signal multiporteuse, après l'application d'une transformation mathématique.

Dans ce cas, ledit pré-filtrage est préférentiellement assuré par un filtre numérique à phase linéaire, comprenant quatre sous-filtres élémentaires.

L'invention concerne également les émetteurs mettant en oeuvre un procédé tel que décrit ci-dessus. Un tel émetteur comprend des moyens de pré-filtrage dudit premier signal, avant son émission, de façon à atténuer la puissance dudit premier signal dans au moins une première portion de ladite première bande de fréquence, voisine de la ou desdites secondes bandes de fréquence.

L'invention concerne encore les signaux émis selon le procédé décrit ci-dessus. Un tel signal numérique multiporteuse radiodiffusé, occupant une première bande de fréquence adjacente à au moins une seconde bande de fréquence affectée chacune à un second signal, est pré-filtré, de façon à atténuer la puissance dudit premier signal dans au moins une première portion de ladite première bande de fréquence, voisine de la ou desdites secondes bandes de fréquence.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :

- la figure 1 illustre différents modes de transmission « simulcast » proposée par la norme ETSI DRM ES 201 980 V1.2. ;
- la figure 2 présente la réponse amplitude-fréquence de trois récepteurs AM du commerce, en ondes moyennes ;
- les figures 3a et 3b illustrent le brouillage par un signal numérique d'un signal analogique, résultant d'une mauvaise sélectivité du récepteur AM, respectivement :

    - figure 3a : en radiofréquence :
    - figure 3b : en audiofréquence ;

- les figures 4a et 4b illustrent le résultat du pré-filtrage du canal numérique selon l'invention, sur des vues comparables à celles des figures 3a et 3b, respectivement :

    - figure 4a : en radiofréquence ;
    - figure 4b : en audiofréquence ;

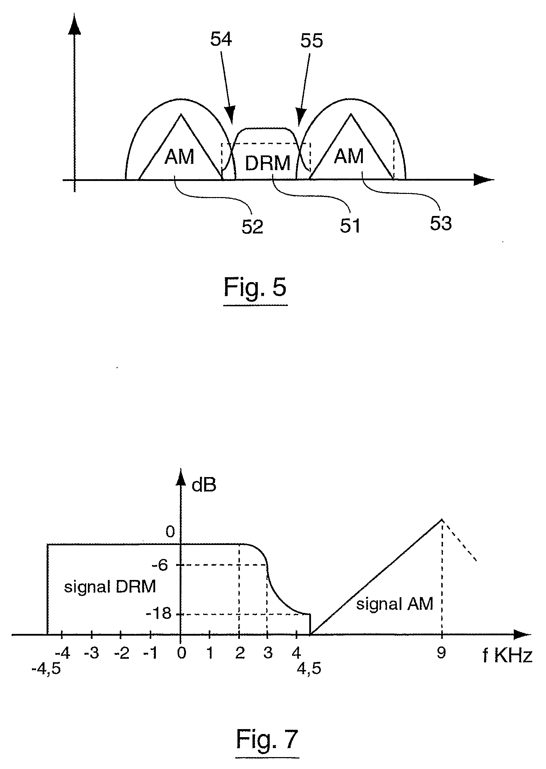

- la figure 5 illustre, dans un autre mode de réalisation, un exemple de pré-filtrage selon l'invention, lorsque le canal numérique est adjacent à deux canaux analogiques ;

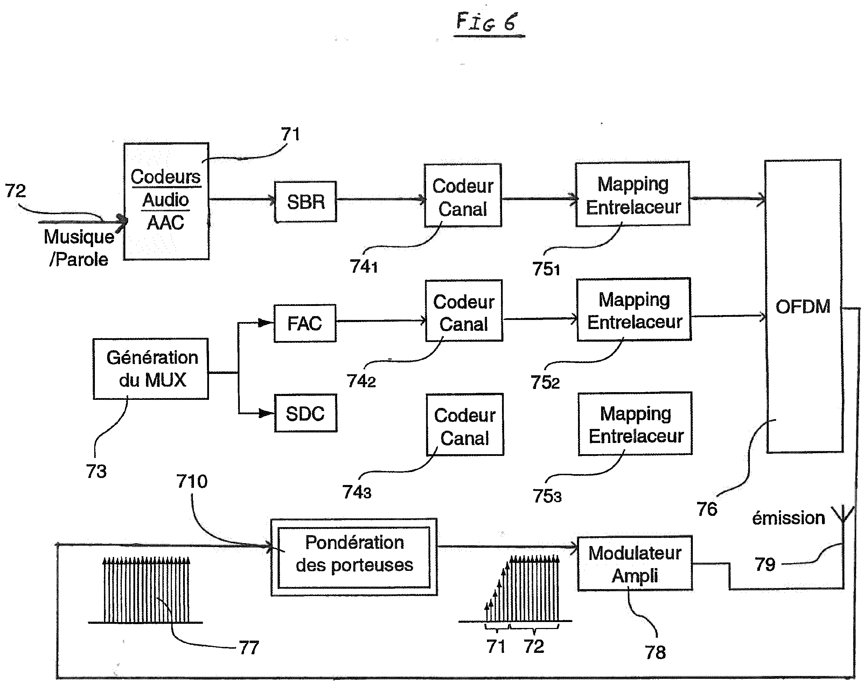

- la figure 6 est un exemple d'émetteur d'un signal numérique selon l'invention, présenté sous la forme d'un synoptique simplifié ;
- la figure 7 donne un exemple particulier de gabarit de pré-filtrage d'un signal numérique selon l'invention.

Le principe de l'invention est donc d'appliquer un pré-filtrage sur un signal numérique multiporteuse, avant son émission, de façon à réduire la perturbation qu'il peut apporter sur la réception d'un autre signal adjacent, et par exemple un signal analogique.

Le contexte de ce mode de réalisation préférentiel est l'introduction de systèmes de radiodiffusion numérique dans les bandes actuellement dévolues aux émissions en AM (Modulation d'Amplitude). Ainsi dans le cadre du projet DRM (Digital Radio Mondiale), dont la norme a été validée à l'ETSI en septembre 2001, un système de radiodiffusion numérique qui devrait se déployer prochainement dans de nombreux pays et notamment en France et en Europe a été défini.

Dans une phase transitoire d'introduction de DRM il est envisagé d'assurer la continuité du service AM et de mettre en oeuvre des émissions de type "simulcast" qui associent un signal numérique et un signal AM analogique classique qui diffusent des programmes identiques. Cependant les solutions de « simulcast » qui sont proposées actuellement ne donnent pas satisfaction du fait du brouillage occasionné par la composante DRM sur l'AM avec des récepteurs AM de mauvaise qualité qui représentent malheureusement une grande partie du parc des récepteurs analogiques.

Le principe proposé selon l'invention consiste à pré-filtrer la composante DRM de manière à combiner une meilleure protection de l'AM en atténuant les fréquences situées dans la bande passante des récepteurs analogiques et une puissance globale de DRM plus élevée par rapport à ce qui est prévu actuellement en augmentant le niveau en dehors de la bande passante de ces récepteurs.

Le pré-filtrage peut être assimilé à l'effet d'un canal particulier, il réduit légèrement les performances du système mais le fonctionnement d'un récepteur DRM standard n'est pas autrement perturbé. En revanche le gain en réduction du brouillage des postes AM est lui très significatif.

Il faut noter que, pour un usager disposant d'un récepteur numérique DRM, le radio-diffuseur garantit la conformité au standard mais pas le canal de transmission. Il est donc possible d'appliquer à l'émission une correction qui peut être considérée comme un canal de propagation particulier et qui peut permettre d'améliorer la réception AM tout en conservant un recul limité du signal DRM sur l'AM.

Le fonctionnement d'un récepteur DRM standard reste acquis, au prix cependant d'une possible baisse de performance, mais qui reste réduite et nettement inférieure au gain obtenu vis-à-vis du brouillage et de la puissance de DRM.

On peut vérifier que, ce qui est gênant pour le récepteur AM, c'est la portion de DRM immédiatement adjacente (35, figure 3b) qu'il faut atténuer pour éviter l'apparition d'un brouilleur médium-aigu dans le signal démodulé. En revanche, rien n'empêche de conserver une puissance de DRM plus élevée au-delà.

Ainsi, selon l'invention et comme représenté sur la figure 4, est appliqué un filtrage de bande réglable en fréquence et en « roll-off » (pente du filtre dans la zone d'atténuation) qui permet de combiner une meilleure protection de l'AM en atténuant (41) les fréquences situées dans la bande passante (42) des récepteurs AM et une puissance globale de DRM plus élevée (43) par rapport à ce qui est prévu actuellement (44) en augmentant le niveau en dehors de la bande passante des récepteurs AM.

Cette puissance globale plus élevée peut être utilisée pour accroître la zone de couverture ou pour simplement permettre de compenser la dégradation des performances due au filtrage, lorsque le gain recherché consiste uniquement à obtenir une diminution notable du brouillage des récepteurs AM.

En effet, comme cela apparaît sur la figure 4b, la zone de brouillage 45 sur le signal démodulé est fortement réduite, par rapport à la zone de brouillage 35 sans l'invention.

Bien sûr, les porteuses du signal numérique 46 se trouvant dans la portion atténuée (47) sont reçues avec une faible puissance, pouvant nuire à leur démodulation. Cependant, les principes mis en oeuvre pour un tel signal numérique (entrelacement en temps et en fréquence, redondance, décodage à maximum de vraisemblance, ...) permettent de pallier cette atténuation, notamment du fait que les puissances des autres porteuses est renforcée.

Bien que cela ne soit pas prévu dans le DRM, il est en outre possible, dans d'autres modes de réalisation, de répartir sélectivement les données sur les différentes porteuses en fonction de la position de ces dernières. Par exemple, on peut placer les informations de signalisation et/ou les bits de poids forts des données sur les porteuses de forte puissance. Les bits de poids faible, et/ou des données optionnelles ou d'amélioration du signal (ou une partie d'entre elles) sur les porteuses atténuées.

Dans le cas de la figure 5, l'ordre de grandeur est un gain d'environ 6 à 12 dB sur le brouillage du signal AM suivant le type de récepteur pour une dégradation équivalente de bruit (DEB) d'environ 2 dB pour le signal numérique DRM.

La dégradation équivalente de bruit est la diminution des performances équivalente à un certain niveau de bruit ajouté au signal. Dans ce cas, cela correspondrait à une réduction de puissance émise du signal DRM de 2 dB, et l'on constate que le gain nettement supérieur obtenu en brouillage des récepteurs permet d'augmenter le niveau du signal DRM d'au moins 2 dB, afin de retrouver des performances pour DRM équivalentes à celles sans correction, tout en conservant un gain très significatif sur le problème de brouillage du signal AM.

Le filtrage est avantageusement paramétrable suivant de multiples critères : en fréquence de coupure, en roll-off, en forme du gabarit, etc., qui peuvent être adaptés notamment en fonction du type de gain recherché et aussi suivant les caractéristiques du canal et de la diffusion.

Le pré-filtrage peut être appliqué en ondes longues, en ondes moyennes (pas de 9 kHz), et en ondes courtes (pas de 10 kHz). Son efficacité qui détermine la dégradation des performances de la transmission DRM peut être aussi ajustée en fonction de la robustesse du mode de transmission ainsi que défini dans la norme.

Comme avantage supplémentaire, le radio-diffuseur pourrait, sans modification notable des puissances d'émission nominales, partant d'une configuration qui préserve bien l'AM, faire évoluer la correction vers une solution qui avantage plus DRM en fonction de l'audience et du parc des récepteurs.

Le principe de l'invention s'applique également aux cas qui dépassent celui du « simulcast », où dans le spectre radiofréquence sont placées une émission adjacente au signal DRM de l'autre côté de la composante AM du "simulcast", ou en émission DRM pure, et qui serait perturbée par le spectre du signal numérique. Pour préserver ce signal qui pourrait être aussi vraisemblablement un canal AM, on peut envisager une pondération supplémentaire située du côté de ce canal.

Ainsi la figure 5 représente un signal DRM 51 adjacent à deux canaux AM 52 et 53 de part et d'autre et pré-filtré de chaque côté (54,55), de manière équivalente ou non, afin de ne pas perturber la réception des signaux analogiques AM 52 et 53. Cependant il faut considérer que la DEB est plus importante qu'avec un seul pré-filtrage.

La même approche peut également au cas où l'un (ou les deux) signaux adjacents (52, 53) est numérique.

On décrit maintenant les aspects principaux d'un émetteur mettant en oeuvre l'invention. La figure 6 présente, sous la forme d'un synoptique simplifié, un tel émetteur.

Les premières étapes de codage consistent à réduire le débit (71) du signal audio (72) appliqué à l'entrée et à construire (73) les informations de signalisation. Viennent ensuite les étapes de codage canal $74_1$, $74_2$ et $74_3$ d'entrelacement en temps et/ou en fréquence $75_1$, $75_2$ et $75_3$.

Le signal OFDM est construit (76), constitué d'un multiplex de porteuses (77) en nombre variable en fonction de la bande occupée et de la robustesse du mode de transmission mis en oeuvre. Une FFT inverse permet de convertir ce multiplex fréquentiel en un signal temporel suivant deux composantes de modulation communément appelées I et Q, ces deux composantes I et Q permettent d'entrer sur un modulateur vectoriel (78) qui transpose le signal bande base en un signal radio fréquence, pouvant être émis par une antenne (79) et diffusé.

Selon l'invention, le codeur, ou émetteur, comporte deux éléments essentiels: d'une part un pré-filtrage du signal DRM pour diminuer la puissance du signal du côté du signal AM (611) afin de réduire la perturbation des récepteurs AM; d'autre part une augmentation de la puissance de DRM en dehors de la zone filtrée (612) qui ne perturbe pas les récepteurs analogiques AM.

Plusieurs manières de réaliser cette pré-correction peuvent être envisagées, dont notamment l'emploi d'un filtre qui peut être placé en différents endroits de la chaîne d'émission avant l'antenne.

Une solution simple consiste à pondérer (710) l'amplitude de chacune des porteuses du multiplex OFDM avant FFT inverse par une table d'allocation. De cette façon, la phase des porteuses reste inchangée.

La pondération du spectre de DRM peut également être réalisée sur les composantes temporelles I et Q par un filtre numérique à phase linéaire qui n'introduit pas de distorsions de phase, seulement un retard. Dans ce cas, le filtrage n'est pas réel si la pondération n'est pas symétrique par rapport à la fréquence centrale, mais complexe et nécessite quatre filtres élémentaires.

On donne maintenant un exemple de pré-filtrage, dans un cas particulier. Il convient de noter qu'il s'agit d'un résultat expérimental qui peut être amélioré.

Une version préliminaire de gabarit de pré-filtrage sur une composante DRM a ainsi été évaluée dans le cadre d'une transmission « simulcast » en ondes moyennes à 1512 kHz pour l'AM situé au-dessus de DRM.

La bande passante des canaux est de 9 kHz et le signal DRM est transmis conformément à la norme suivant le mode A, à 204 porteuses. Cette version de filtrage est encore perfectible.

Le pré-filtrage du signal DRM est conforme au gabarit de la figure 7 défini de la manière suivante ou f est en kHz :

$$H(f): \quad -4.5 < f < 2.25 \quad AdB = 0$$

$$2.25 < f < 3.0 \quad AdB = -12 \cdot \frac{1 - \cos\left(\frac{f - 2.25}{1.5}\pi\right)}{2}$$

$$3.0 < f < 4.5 \quad AdB = -6 + 12 \cdot \frac{3}{1.5} \cdot \frac{1 - \cos\left(\frac{f - 1.5}{3}\pi\right)}{2}$$

avec les valeurs remarquables suivantes :

- à 2.25 kHz de la fréquence centrale DRM : 0 dB
- à 3.00 kHz de la fréquence centrale DRM : -6 dB
- à 3.50 kHz de la fréquence centrale DRM : -12 dB
- à 4.00 kHz de la fréquence centrale DRM : -16 dB
- à 4.50 kHz de la fréquence centrale DRM : -18 dB

La dégradation équivalente de bruit (DEB) obtenue sur canal 1 (canal gaussien où la seule perturbation est constituée d'un bruit blanc) et sur canal 2 (typique d'un canal en ondes moyennes comportant plusieurs trajets) est de 2.7 dB.

Plusieurs récepteurs AM bas de gamme ont été testés :

- poste n°1 (accord manuel; bas de gamme)

- poste n°2 (accord à synthèse de fréquence ; milieu-bas de gamme)
- poste n°3 (accord manuel; milieu-bas de gamme)
- autoradio n°4 (milieu de gamme)
- autoradio n°5 (milieu de gamme)
- autoradio n°6 (milieu de gamme)

Des mesures comparatives de rapport signal à bruit (SNR), pondéré d'après une courbe représentative de la réponse de l'oreille, ont été effectuées avec les deux configuration de signal DRM: avec et sans pré-filtrage. Le SNR est relevé sur sortie électrique : sortie casque ou bornes du HP, mais également avec un micro de mesure placé devant le haut-parleur car la bande passante de l'étage d'amplification et du haut-parleur est parfois favorable à la réduction du brouillage de l'AM par DRM.

Le SNR pondéré en « simulcast » classique (sans l'invention) avec un recul de DRM de 16 dBc par rapport à l'AM s'établit de la manière suivante :

| récepteur : | 1 | 2 | 3 | 4 | 5 | 6 |
|---|---|---|---|---|---|---|
| sortie casque ou HP: | 17.5 | 10.5 | 9 | 17 | 24 | 24 |
| écoute du HP avec micro : | 20 | 12 | 12 | 20 | 25 | 27 |

Le SNR pondéré avec pré filtrage, avec un recul de DRM de 14 dBc (qui compense donc presque complètement la DEB due au pré-filtrage), exprimé en gain par rapport à la solution classique :

| récepteur | 1 | 2 | 3 | 4 | 5 | 6 |
|---|---|---|---|---|---|---|
| sortie casque ou HP | 4.0 | 3.0 | 4.0 | 10.5 | 10.0 | 3.0 |
| écoute du HP avec micro | 6.5 | 2.0 | 4.5 | 10.0 | 8.0 | 2.5 |

Ce gain est calculé par rapport aux résultats correspondants en "simulcast" classique: donc en HP + micro le gain se compte par rapport à la situation HP + micro du « simulcast » classique et l'on bénéficie donc du gain par rapport à la sortie casque.

On constate donc des résultats variables suivant la bande passante plus ou moins bien filtrée du récepteur, mais qui dans tous les cas représentent un gain significatif par rapport à la solution classique. Ce sont les résultats d'une première expérimentation de filtrage et une optimisation de la dégradation équivalente et du gain en SNR sont encore envisageables dans des proportions notables (1 dB de moins en DEB ; 1 à 3 dB en SNR suivant les récepteurs).

De plus, pour des niveaux de SNR mesurés identiques, le bruit avec pré-filtrage de DRM selon l'invention paraît subjectivement sensiblement moins gênant car donnant plus l'impression d'un souffle de réception (car le bruit a tendance à être blanchi, c'est-à-dire uniformisé en réponse amplitude-fréquence) que le crépitement de la solution classique qui fait d'emblée supposer la présence d'un brouilleur.

**Revendications**

1. Procédé de radiodiffusion d'un premier signal numérique multiporteuse (DRM, 51) occupant une première bande de fréquence adjacente à au moins une seconde bande de fréquence affectée chacune à un second signal (AM, 52, 53), **caractérisé en ce que** ledit premier signal et ledit ou un desdits seconds signaux portent au moins en partie un même signal source,
en ce qu'on applique audit premier signal un pré-filtrage, avant son émission, de façon à atténuer (41, 54, 55) la puissance dudit premier signal dans au moins une première portion de ladite première bande de fréquence, immédiatement adjacente de la ou desdites secondes bandes de fréquence et située dans la bande passante des récepteurs du second signal, et à augmenter (43) la puissance dudit premier signal dans une seconde portion de ladite première bande de fréquence, éloignée de la ou desdites secondes bandes de fréquence et **en ce qu'**on émet simultanément ledit premier signal et ledit ou un desdits seconds signaux portant au moins en partie un même signal source.

2. Procédé de radiodiffusion selon la revendication 1, **caractérisé en ce que** ledit ou au moins un desdits seconds signaux (AM, 52, 53) est un signal de radiodiffusion analogique.

**3.** Procédé de radiodiffusion selon la revendication 2, **caractérisé en ce que** ledit ou au moins un desdits seconds signaux (AM, 52, 53) est un signal modulé en amplitude.

**4.** Procédé de radiodiffusion selon l'une quelconque des revendications 1 à 3, **caractérisé en ce que** ledit pré-filtrage conserve sensiblement la puissance du signal.

**5.** Procédé de radiodiffusion selon l'une quelconque des revendications 1 à 4, **caractérisé en ce que** ledit pré-filtrage est programmable.

**6.** Procédé de radiodiffusion selon la revendication 5, **caractérisé en ce que** la programmation dudit pré-filtrage porte sur au moins un des éléments suivants :

- fréquence de coupure de filtrage ;
- puissance affectée à chaque portion de la première bande de fréquence ;
- forme du gabarit de filtrage ;
- pente du filtre dans la ou les zones d'atténuation (« roll-off »).

**7.** Procédé de radiodiffusion selon l'une quelconque des revendications 5 et 6, **caractérisé en ce que** la programmation dudit pré-filtrage tient compte d'au moins une des informations suivantes :

- bande de fréquence ;
- caractéristiques du ou des signaux adjacents ;
- caractéristiques particulières d'un émetteur ;
- caractéristiques particulières du canal de transmission ;
- évolution dans le temps des parcs de récepteurs.

**8.** Procédé de radiodiffusion selon l'une quelconque des revendications 1 à 7, **caractérisé en ce que** le gabarit dudit pré-filtrage présente des transitions progressives.

**9.** Procédé de radiodiffusion selon l'une quelconque des revendications 1 à 8, **caractérisé en ce que** ledit pré-filtrage est une pondération appliquée sélectivement sur chacune des fréquences porteuses dudit signal multiporteuse, avant l'application d'une transformation mathématique.

**10.** Procédé de radiodiffusion selon la revendication 9, **caractérisé en ce que** ladite pondération tient compte de coefficients de pondération stockés dans une table d'allocation.

**11.** Procédé de radiodiffusion selon l'une quelconque des revendications 1 à 10, **caractérisé en ce que** ledit pré-filtrage est appliqué sur les composantes temporelles I et Q dudit signal multiporteuse, après l'application d'une transformation mathématique.

**12.** Procédé de radiodiffusion selon la revendication 11, **caractérisé en ce que** ledit pré-filtrage est assuré par un filtre numérique à phase linéaire, comprenant quatre sous-filtres élémentaires.

**13.** Emetteur de radiodiffusion d'un premier signal numérique multiporteuse occupant une première bande de fréquence adjacente à au moins une seconde bande de fréquence affectée chacune à un second signal,
**caractérisé en ce que** ledit premier signal et ledit ou un desdits seconds signaux portent au moins en partie un même signal source,
**en ce qu'**il comprend des moyens de pré-filtrage dudit premier signal, avant son émission, de façon à atténuer la puissance dudit premier signal dans au moins une première portion de ladite première bande de fréquence, immédiatement adjacente de la ou desdites secondes bandes de fréquence et située dans la bande passante des récepteurs du second signal, et à augmenter la puissance dudit premier signal dans une seconde portion de ladite première bande de fréquence, éloignée de la ou desdites secondes bandes de fréquence et **en ce qu'**il comprend des moyens d'émission dudit premier signal simultanément à l'émission dudit ou un desdits seconds signaux portant au moins en partie un même signal source.

**14.** Signal numérique multiporteuse radiodiffusé occupant une première bande de fréquence adjacente à au moins une seconde bande de fréquence affectée chacune à un second signal,
**caractérisé en ce que** ledit premier signal et ledit ou un desdits seconds signaux portent au moins en partie un même signal source, **en ce qu'**il est pré-filtré, de façon à atténuer la puissance dudit premier signal dans au moins une première portion de ladite première bande de fréquence, immédiatement adjacente de la ou desdites secondes bandes de fréquence et située dans la bande passante des récepteurs du second signal, et à augmenter la puissance dudit premier signal dans une seconde portion de ladite première bande de fréquence, éloignée de la ou desdites secondes bandes de fréquence et **en ce qu'**il est émis simultanément audit ou à desdits seconds signaux portant au moins en partie un même signal source.

**Patentansprüche**

1. Rundfunkverfahren eines ersten digitalen Mehrträgersignals (DRM, 51), das ein erstes Frequenzband einnimmt, das an mindestens ein zweites Frequenzband angrenzt, jeweils zugeordnet einem zweiten Signal (AM, 52, 53), **dadurch gekennzeichnet, dass** das erste Signal und das oder eines der zweiten Signale mindestens teilweise ein selbes Quellensignal tragen,

   dass am ersten Signal vor seinem Senden eine Vorfilterung angewandt wird, um die Leistung des ersten Signals in mindestens einem ersten Abschnitt des ersten Frequenzbandes, das unmittelbar an das oder die zweiten Frequenzbänder angrenzt und sich in der Bandbreite der Empfänger des zweiten Signals befindet, zu dämpfen (41, 54, 55), und die Leistung des ersten Signals in einem zweiten Abschnitt des ersten Frequenzbandes, der von dem oder den zweiten Frequenzbändern entfernt ist, zu erhöhen (43),

   und dass gleichzeitig das erste Signal und das oder eines der zweiten Signale, die mindestens teilweise ein selbes Quellensignal tragen, gesandt werden.

2. Rundfunkverfahren nach Anspruch 1, **dadurch gekennzeichnet, dass** das oder mindestens eines der zweiten Signale (AM, 52, 53) ein analoges Rundfunksignal ist.

3. Rundfunkverfahren nach Anspruch 2, **dadurch gekennzeichnet, dass** das oder mindestens eines der zweiten Signale (AM, 52, 53) ein amplitudenmoduliertes Signal ist.

4. Rundfunkverfahren nach einem der Ansprüche 1 bis 3, **dadurch gekennzeichnet, dass** die Vorfilterung im Wesentlichen die Leistung des Signals bewahrt.

5. Rundfunkverfahren nach einem der Ansprüche 1 bis 4, **dadurch gekennzeichnet, dass** die Vorfilterung programmierbar ist.

6. Rundfunkverfahren nach Anspruch 5, **dadurch gekennzeichnet, dass** die Programmierung der Vorfilterung mindestens eines der folgenden Elemente betrifft:

   - Filtergrenzfrequenz;
   - Leistung, die jedem Abschnitt des ersten Frequenzbandes zugeordnet ist;
   - Form der Filterschablone;
   - Gefälle des Filters in der oder den Dämpfungszonen ("roll-off").

7. Rundfunkverfahren nach einem der Ansprüche 5 und 6, **dadurch gekennzeichnet, dass** die Programmierung der Vorfilterung mindestens eine der folgenden Informationen berücksichtigt:

   - Frequenzband;
   - Merkmale des oder der angrenzenden Signale;
   - besondere Merkmale eines Senders;
   - besondere Merkmale des Übertragungskanals;
   - zeitliche Entwicklung der Empfängerparks.

8. Rundfunkverfahren nach einem der Ansprüche 1 bis 7, **dadurch gekennzeichnet, dass** die Schablone der Vorfilterung progressive Übergänge aufweist.

9. Rundfunkverfahren nach einem der Ansprüche 1 bis 8, **dadurch gekennzeichnet, dass** die Vorfilterung eine Gewichtung ist, die selektiv an jeder der Trägerfrequenzen des Mehrträgersignals vor dem Anwenden einer mathematischen Transformation angewandt wird.

**10.** Rundfunkverfahren nach Anspruch 9, **dadurch gekennzeichnet, dass** die Gewichtung in einer Zuteilungstabelle gespeicherte Gewichtungskoeffizienten berücksichtigt.

**11.** Rundfunkverfahren nach einem der Ansprüche 1 bis 10, **dadurch gekennzeichnet, dass** die Vorfilterung an den Zeitkomponenten I und Q des Mehrträgersignals nach dem Anwenden einer mathematischen Transformation angewandt wird.

**12.** Rundfunkverfahren nach Anspruch 11, **dadurch gekennzeichnet, dass** die Vorfilterung durch einen digitalen Filter auf linearer Basis, umfassend vier elementare Unterfilter, gewährleistet wird.

**13.** Rundfunksender eines ersten digitalen Mehrträgersignals, das ein erstes Frequenzband einnimmt, das an mindestens ein zweites Frequenzband angrenzt, jeweils zugeordnet einem zweiten Signal,
**dadurch gekennzeichnet, dass** das erste Signal und das oder eines der zweiten Signale mindestens teilweise ein selbes Quellensignal tragen,
dass er Mittel zur Vorfilterung des ersten Signals vor seinem Senden umfasst, um die Leistung des ersten Signals in mindestens einem ersten Abschnitt des ersten Frequenzbandes, das unmittelbar an das oder die zweiten Frequenzbänder angrenzt und sich in der Bandbreite der Empfänger des zweiten Signals befindet, zu dämpfen, und die Leistung des ersten Signals in einem zweiten Abschnitt des ersten Frequenzbandes, der von dem oder den zweiten Frequenzbändern entfernt ist, zu erhöhen,
und dass er Mittel zum Senden des ersten Signals gleichzeitig mit dem Senden des oder eines der zweiten Signale umfasst, die mindestens teilweise ein selbes Quellensignal tragen.

**14.** Über Rundfunk gesandtes digitales Mehrträgersignal, das ein erstes Frequenzband einnimmt, das an mindestens ein zweites Frequenzband angrenzt, jeweils zugeordnet einem zweiten Signal,
**dadurch gekennzeichnet, dass** das erste Signal und das oder eines der zweiten Signale mindestens teilweise ein selbes Quellensignal tragen,
dass es vorgefiltert wird, um die Leistung des ersten Signals in mindestens einem ersten Abschnitt des ersten Frequenzbandes, das unmittelbar an das oder die zweiten Frequenzbänder angrenzt und sich in der Bandbreite der Empfänger des zweiten Signals befindet, zu dämpfen, und die Leistung des ersten Signals in einem zweiten Abschnitt des ersten Frequenzbandes, der von dem oder den zweiten Frequenzbändern entfernt ist, zu erhöhen, und dass es gleichzeitig mit dem oder den zweiten Signalen gesandt wird, die mindestens teilweise ein selbes Quellensignal tragen.

**Claims**

**1.** Radio broadcast method for a first multicarrier digital signal (DRM, 51) occupying a first frequency band that is adjacent to at least one second frequency band, each of which is assigned to a second signal (AM, 52, 53), **characterized in that** said first signal and said or one of said second signal (s) carry one and the same source signal at least in part,
**in that** prefiltering is applied to said first signal, prior to transmission thereof, so as to attenuate (41, 54, 55) the power of said first signal in at least a first portion of said first frequency band, which is immediately adjacent to the or said second frequency band(s) and situated in the passband of the receivers of the second signal, and to increase (43) the power of said first signal in a second portion of said first frequency band, which is remote from the or said second frequency band(s), and **in that** said first signal and said or one of said second signal (s) carrying one and the same source signal at least in part are transmitted simultaneously.

**2.** Radio broadcast method according to Claim 1, **characterized in that** said or at least one of said second signal (s) (AM, 52, 53) is an analogue radio broadcast signal.

**3.** Radio broadcast method according to Claim 2, **characterized in that** said or at least one of said second signal (s) (AM, 52, 53) is an amplitude-modulated signal.

**4.** Radio broadcast method according to any one of Claims 1 to 3, **characterized in that** said prefiltering substantially preserves the power of the signal.

**5.** Radio broadcast method according to any one of Claims 1 to 4, **characterized in that** said prefiltering is programmable.

6. Radio broadcast method according to Claim 5, **characterized in that** the programming of said prefiltering is concerned with at least one of the following items:

   - filtering cut-off frequency;
   - power assigned to each portion of the first frequency band;
   - shape of the filtering template;
   - slope of the filter in the attenuation area (s) ("roll-off").

7. Radio broadcast method according to either of Claims 5 and 6, **characterized in that** the programming of said prefiltering takes account of at least one of the following pieces of information:

   - frequency band;
   - characteristics of the adjacent signal (s);
   - special characteristics of a transmitter;
   - special characteristics of the transmission channel;
   - change in the pools of receivers over time.

8. Radio broadcast method according to any one of Claims 1 to 7, **characterized in that** the template of said prefiltering has progressive transitions.

9. Radio broadcast method according to any one of Claims 1 to 8, **characterized in that** said prefiltering is weighting applied selectively to each of the carrier frequencies of said multicarrier signal, prior to the application of a mathematical transformation.

10. Radio broadcast method according to Claim 9, **characterized in that** said weighting takes account of weighting coefficients that are stored in an allocation table.

11. Radio broadcast method according to any one of Claims 1 to 10, **characterized in that** said prefiltering is applied to the temporal I and Q components of said multicarrier signal, following the application of a mathematical transformation.

12. Radio broadcast method according to Claim 11, **characterized in that** said prefiltering is provided by a linear-phase digital filter, comprising four elementary subfilters.

13. Radio broadcast transmitter for a first multicarrier digital signal occupying a first frequency band that is adjacent to at least one second frequency band, each of which is assigned to a second signal, **characterized in that** said first signal and said or one of said second signal (s) carry one and the same source signal at least in part,
    **in that** it comprises means for prefiltering said first signal, prior to transmission thereof, so as to attenuate the power of said first signal in at least a first portion of said first frequency band, which is immediately adjacent to the or said second frequency band(s) and situated in the passband of the receivers of the second signal, and to increase the power of said first signal in a second portion of said first frequency band, which is remote from the or said second frequency band(s),
    and **in that** it comprises means for transmitting said first signal simultaneously with the transmission of said or one of said second signal (s) carrying one and the same source signal at least in part.

14. Radio-broadcast multicarrier digital signal occupying a first frequency band that is adjacent to at least one second frequency band, each of which is assigned to a second signal,
    **characterized in that** said first signal and said or one of said second signal (s) carry one and the same source signal at least in part,
    **in that** it is prefiltered, so as to attenuate the power of said first signal in at least a first portion of said first frequency band, which is immediately adjacent to the or said second frequency band(s) and situated in the passband of the receivers of the second signal, and to increase the power of said first signal in a second portion of said first frequency band, which is remote from the or said second frequency band(s), and **in that** it is transmitted simultaneously with said second signal (s) carrying one and the same source signal at least in part.

Fig. 1

Fréquence par rapport à la fréquence centrale en KHz

Fig. 2

Fig. 3A

Fig. 3B

Fig. 4A

Fig. 4B

Fig. 5

Fig. 7

FIG 6

EP 1 627 479 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0952696 A